Europäisches Patentamt

European Patent Office

Office européen des brevets

(11) Veröffentlichungsnummer: **0 117 865**
**B1**

# EUROPÄISCHE PATENTSCHRIFT

(45) Veröffentlichungstag der Patentschrift:
15.10.86

(21) Anmeldenummer: 84890025.4

(22) Anmeldetag: 31.01.84

(51) Int. Cl.⁴: **H 01 M  6/52,** H 01 M  10/54,
C 22 B  7/00

(54) Einrichtung zum thermischen Aufschliessen von galvanischen Elementen.

(30) Priorität: 01.02.83  AT 339/83

(43) Veröffentlichungstag der Anmeldung:
05.09.84 Patentblatt 84/36

(45) Bekanntmachung des Hinweises auf die Patenterteilung:
15.10.86 Patentblatt 86/42

(84) Benannte Vertragsstaaten:
DE FR GB SE

(56) Entgegenhaltungen:
EP-A-0 069 117
DE-A-2 619 883
FR-A-1 061 410

(73) Patentinhaber: VOEST- ALPINE Aktiengesellschaft,
Friedrichstrasse 4, A-1011 Wien (AT)

(72) Erfinder: Hans, Walter, Burggasse 12, A-8652
Kindberg (AT)
Erfinder: Müllner, Paul, Walzwerkstrasse 19, A-4050
Traun (AT)
Erfinder: Kroitzsch, Ernst, Dr., Wolfsgartenweg 13,
A-5020 Salzburg (AT)
Erfinder: Reiterer, Hans- Detlef, Dr., Sandgasse 47,
A-8010 Graz (AT)

(74) Vertreter: Kretschmer, Adolf, Dipl.- Ing.,
Patentanwälte Dipl.Ing. A. Kretschmer Dr.
Thomas M. Haffner Schottengasse 3a, A-1014
Wien (AT)

## Beschreibung

Die Erfindung bezieht sich auf eine Einrichtung zum thermischen Aufschließen von gebrauchten galvanischen Elementen, insbesondere quecksilberhaltigen Primärzellen, mit einer drehbar gelagerten, von außen beheizbaren Drehretorte, einer Fördereinrichtung zum Einbringen der galvanischen Elemente und einem axialen Rohr als Gasaustragsöffnung, an welche ein Sauggebläse angeschlossen ist. Derartige galvanische Elemente, insbesondere die sogenannten Knopfzellen, enthalten eine Reihe von Schwermetallen und mehr oder minder giftige Metalle bzw. deren Salze, wie beispielsweise Quecksilber, Kadmium, Blei und Zink. Derartige Knopfzellen werden vor allen Dingen in Taschenrechnern, Uhren, Fotoapparaten und elektronischen Gebrauchsartikeln verwendet und sind in erster Linie als Quecksilberoxyd/Zink-, Quecksilberoxyd/Kadmiumzellen oder Zellen mit Silberoxydelektroden mit unterschiedlichen Dimensionierungen gebräuchlich. Mit Rücksicht auf die Giftigkeit der in derartigen Zellen enthaltenen Schwermetalle können diese nicht ohne weiteres mit Hausmüll gemeinsam verarbeitet werden und es werden daher derartige Hochleistungszellen, insbesondere Knopfzellen, gesondert gesammelt, um die teilweise wertvollen Schwermetalle rückzugewinnen.

Vor einer Aufarbeitung von deraratigen galvanischen Elementen, welche beispielsweise durch saure oder alkalische Laugung möglich wäre, ist es zunächst erforderlich, das Gehäuse dieser Zellen aufzuschließen. Insbesondere bei quecksilberhaltigen Zellen besteht jedoch bei dieser Gelegenheit die Gefahr, daß Quecksilberdämpfe austreten und es sind daher für das Aufschließen von gebrauchten galvanischen Elementen besondere Vorkehrungen zu treffen.

Eine Einrichtung der eingangs genannten Art ist bereits aus der FR-A-1 061 410 zu entnehmen. Bei dieser bekannten Einrichtung wird eine Drehretorte verwendet, welche von außen beheizbar ist. In das Innere der Drehretorte kann Wasserdampf eingeführt werden. Prinzipiell ist die Verwendung eines Drehrohrofens zum thermischen Aufschließen von gebrauchten galvanischen Elementen auch bereits in der EP-A1 69 117 bereits beschrieben worden, wobei bei dieser bekannten Einrichtung eine direkte Beheizung vorgesehen war und die Rauchgase gemeinsam mit Quecksilberdämpfen abgesaugt wurden.

Die Erfindung zielt nun darauf ab eine besonders einfach zu betreibende Einrichtung der eingangs genannten Art zu schaffen, mit welcher das thermische Aufschließen von gebrauchten galvanischen Elementen gefahrlos möglich ist, und das in derartigen Zellen enthaltene Quecksilber vor der weiteren Aufarbeitung quantitativ abgetrennt werden kann. Zur Lösung dieser Aufgabe ist die erfindungsgemäße Einrichtung dadurch gekennzeichnet, daß die Drehretorte druckfest ausgebildet ist, wobei die Aufgabeöffnung zumindest teilweise verschließbar ist, daß die Fördereinrichtung von einer Förderschnecke mit reversierbarem Antrieb gebildet ist, daß die Drehretorte nahe der Aufgabeöffnung mit geringem Durchmesser ausgebildet ist und daß die Förderschnecke starr mit dem Drehretorteninnenmantel verbunden ist und sich bis in den Bereich größeren Innendurchmessers der Drehretorte erstreckt. Dadurch, daß für das Aufschließen eine druckfeste, beheizbare Drehretorte verwendet wird, wird es möglich, diese beheizte Drehretorte zumindest teilweise unter Unterdruck zu setzen und durch das Sauggebläse kann sichergestellt werden, daß die entstehenden giftigen Dämpfe lediglich an einer Stelle aus der Drehretorte ausgebracht werden. Es ist in diesem Fall ohne weiteres möglich, an dieser Stelle eine Einrichtung zum Abscheiden von kondensierendem Quecksilber vorzusehen und es kann auf diese Weise das verdampfende Quecksilber oder andere leicht verdampfende Schwermetallverbindungen aus den galvanischen Elementen vor der weiteren Aufarbeitung abgetrennt werden. Durch das Erhitzen in der Drehretorte werden die in galvanischen Zellen üblicherweise verwendeten Kunststoffdichtungen spröd und brüchig und der im Inneren der Zellen entstehende Überdruck bringt diese innerhalb der Drehretorte zum Platzen. Bei dieser Gelegenheit werden unter anderem Quecksilberdämpfe frei, und dadurch daß die Aufgabeöffnung teilweise verschlossen wird, kann ein kontrollierter Luftstrom von der Aufgabeöffnung zur Gasaustragsöffnung aufrechterhalten werden, welcher die entstehenden Dämpfe quantitativ an eine Gasreinigungseinrichtung weiterträgt.

Die Beschickung der Drehretorte wird hiebei dadurch vereinfacht, daß die Fördereinrichtung von einer Förderschnecke mit reversierbarem Antrieb gebildet ist. Zum Einbringen von galvanischen Elementen wird hiebei die Förderschnecke in einem Drehsinn so angetrieben, daß das an der Aufgabeöffnung eingebrachte galvanische Zellenmaterial in die Drehretorte hineingefördert wird. Nach dem erfolgten Platzen der galvanischen Zellen unter der Einwirkung der Temperatur, kann die Einrichtung durch Umkehr der Förderrichtung der Förderschnecke in ebenso einfacher Weise wieder entleert werden. Dadurch, daß die Drehretorte so ausgestaltet ist, daß sie nahe der Aufgabeöffnung mit geringerem Durchmesser ausgebildet ist, und daß die Förderschnecke starr mit dem Drehretorteninnenmantel verbunden ist und sich bis in den Bereich größeren Innendurchmessers der Drehretorte erstreckt, können die beim Zerplatzen der Zellen in alle Richtungen fliegenden Metallteile von der Aufgabeöffnung selbst ferngehalten werden, und durch die Drehung der Drehretorte während des Erhitzens, werden gleichzeitig die nach außen geschleuderten Metallteilchen wieder in das Innere der Drehretorte gefördert.

Um eine gerichtete Gasströmung aufrechtzuerhalten, ist vorzugsweise an die verschließbare Aufgabeöffnung eine Drosseleinrichtung für die Steuerung der Luftzufuhr angeschlossen.

Das auf diese Weise vom Sauggebläse in die Drehretorte eingesaugte oxydierende Gas, insbesondere Luft, unterstützt hiebei die oxydative Zerstörung des zwischen Deckel und Gehäuse befindlichen Dichtmaterials, welches aus Kunststoff, Bitumen od.dgl. bestehen kann. Gleichzeitig sorgt diese gerichtete Strömung für den Abtransport der giftigen Schwermetallgase zur Gasaustragsöffnung und zu einer nachgeschalteten Gaswascheinrichtung.

In einfacher Weise kann die Drehretorte von außen mit Gas- und/oder Ölbrennern oder elektrisch beheizbar sein. Die Drehretorte kann hiebei in einem im wesentlichen geschlossenen Gehäuse untergebracht werden, welches einen Kamin für den Austritt der Verbrennungsgase der Heizeinrichtung aufweist.

Um die Beschickung und das Ausbringen des Füllgutes aus der Drehretorte zu erleichtern, kann vorzugsweise die Drehretorte um ihre Längsachse kippbar gelagert sein. Zur Aufgabe des Füllmaterials kann hiebei das Aufgabeende angehoben werden, so daß die Förderwirkung der Förderschnecke durch die Schwerkraft unterstützt wird. In analoger Weise, kann für das Ausbringen des Füllgutes nach dem Zerplatzen der galvanischen Elemente die Drehretorte an der der Aufgabeöffnung zugewendeten Seite abgesenkt werden, so daß die nunmehr in die Gegenrichtung in Umdrehung versetzte Förderschnecke das gesamte innerhalb der Drehretorte enthaltene Füllgut ausbringen kann.

Zur Verbesserung des thermischen und des oxydativen Angriffes innerhalb der Drehretorte, kann die Drehretorte an ihrem Innenmantel sich in Achsrichtung erstreckende, insbesondere achsparallele, sich radial einwärts erstreckende Prallbleche aufweisen. Auf diese Weise können galvanische Elemente unterschiedlicher Dimensionierung gut durchmischt werden und sichergestellt werden, daß tatsächlich alle galvanischen Elemente mechanisch zerstört werden.

Die Gasaustrittsöffnung, über welche die Schwermetalldämpffe abgezogen werden, kann in besonders einfacher Weise als an der der Förderschnecke gegenüberliegenden Stirnwand der Drehretorte in der Drehachse derselben angeordnetes axiales Rohr ausgebildet sein. Auf diese Weise ergibt sich eine einfache Konstruktion, welche auch ohne Schwierigkeiten den Erfordernissen entsprechend dichtgehalten werden kann. Vorzugsweise ist die Gasaustrittsöffnung durch eine Dichtplatte verschließbar, deren Betätigungsglied sich durch die Gasaustrittsöffnung erstreckt und in einem Abstand von der Verschlußplatte Abstreifelemente trägt, welche beim Schließen der Gasaustrittsöffnungen die Innenwand des Rohres räumen. Nach Beendigung der Entwicklung von Schwermetalldämpfen wird diese Gasaustrittsöffnung verschlossen und gegebenenfalls im Rohr kondensierter Metalldampf kann durch die am Betätigungsglied getragenen Abstreifelemente nach außen abgestreift werden. Bei einem Kippen der Drehretorte zum Zwecke des Austragens der nunmehr aufgeschlossenen gebrauchten galvanischen Elemente besteht auf diese Weise keine Gefahr eines Zurücktretens von Quecksilber in die einer weiteren Aufarbeitung zuzuführenden Metallteile. Diese Abstreifelemente können in besonders einfacher Weise als Förderschnecke ausgebildet sein, so daß durch Drehen des Betätigungsgliedes für die Abschlußplatte ein Herausfördern des gegebenenfalls an den Rohrwänden kondensierten Quecksilbers und Flugstaubes ermöglicht wird.

An die Gasaustrittsöffnungen ist vorzugsweise eine Gaswascheinrichtung angeschlossen, an deren tiefster Stelle ein Absperrhahn für das Ablassen von gegenüber der Waschflüssigkeit spezifisch schwererem Kondensat angeordnet ist, wobei das Sauggebläse an die Gaswascheinrichtung angeschlossen ist. Es wird somit das Sauggebläse von den Schwermetalldämpfen freigehalten und gegebenenfalls gebildetes Quecksilber kann an der untersten Stelle der Gaswascheinrichtung durch öffnen des Absperrhahnes abgezogen werden.

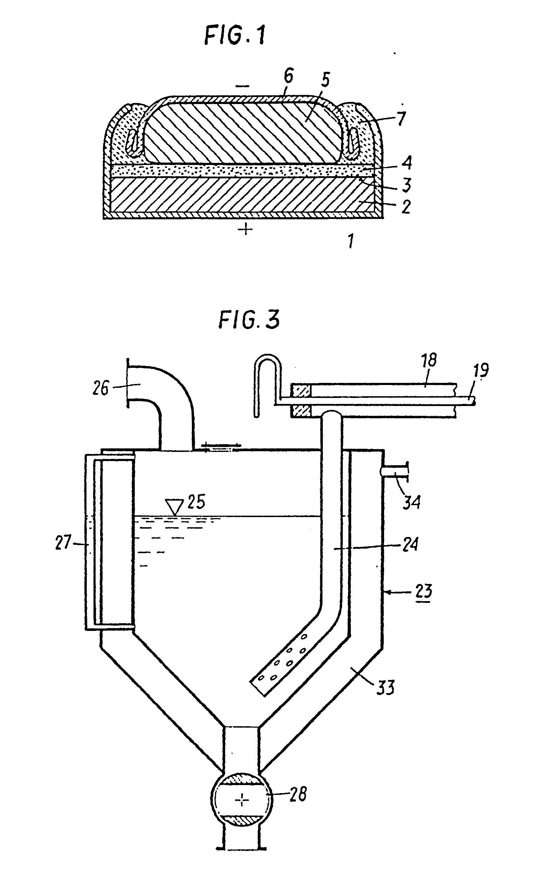

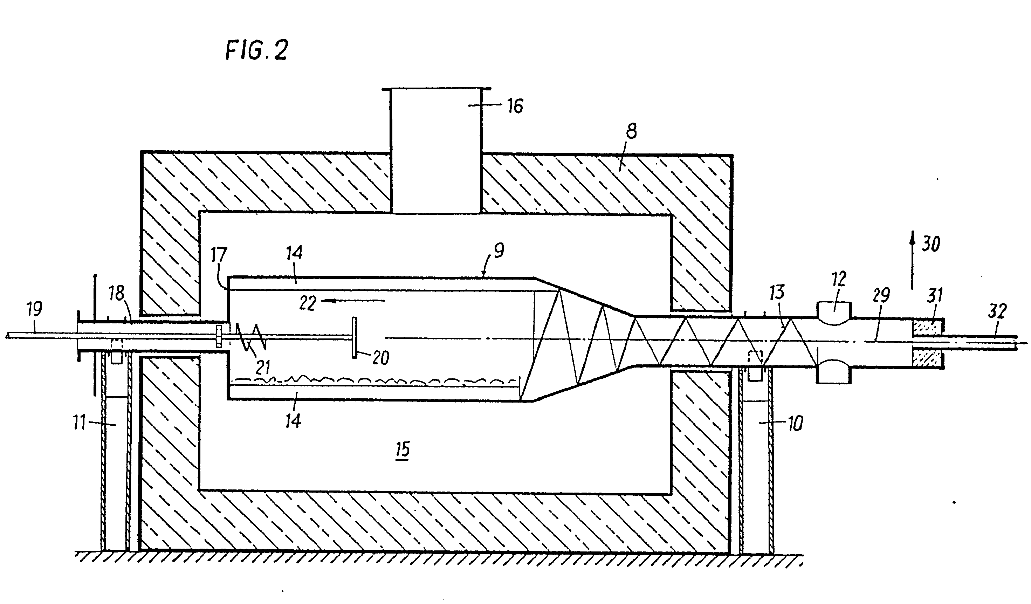

Die Erfindung wird nachfolgend an Hand eines in der Zeichnung dargestellten Ausführungsbeispieles näher erläutert. In dieser zeigen, Fig. 1 einen Schnitt durch eine Knopfzelle; Fig. 2 einen schematischen Längsschnitt durch die erfindungsgemäße Einrichtung und Fig. 3 einen Schnitt analog der Fig. 2 durch die an die Retorte angeschlossene Gaswascheinrichtung.

In Fig. 1 ist eine Knopfzelle dargestellt. Mit 1 ist das Gehäuse bzw. der Zellnapf bezeichnet. Am Boden des Gehäuses befindet sich eine Elektrode 2, welche leitend mit dem Zellnapf verbunden ist. Diese Elektrode 2 kann aus metallischem Quecksilber oder auch aus Silber bestehen, welches mit den jeweiligen oxydischen Verbindungen und anderen Metalloxyden, wie beispielsweise Manganoxyd vermengt ist. Im Anschluß an die Elektrode 2 ist ein Diaphragma 3 vorgesehen, welches mit einem Elektrolyt 4 getränkt ist. Oberhalb des Diaphragmas 3 befindet sich die zweite Elektrode 5. Als Metall für diese zweite Elektrode 5 wird zumeist Zink oder Kadmium verwendet. Im allgemeinen kommen eine Reihe von Metallen und deren Salzen als Kathoden/Anodenpaarung in Frage, die durch entsprechende Potentialdifferenz in der Lage sind, Strom zu liefern. Der Stromfluß wird durch den Elektrolyten 4 sichergestellt, der wechselweise durch das Diaphragma 3 diffundiert. Der Elektrolyt besteht zumeist aus Alkalien, beispielsweise aus Natrium oder Kaliumhydroxyd in Wasser. Die Elektrode 5 wird durch einen Deckel 6 abgedeckt, welcher häufig an der Außenseite vergoldet ist, um einen guten Kontakt mit geringem Übergangswiderstand sicherzustellen. Zur Trennung des mit der positiven Elektrode 2 leitend verbundenen Zellnapfes 1 vom Deckel 6, welcher leitend mit der negativen Elektrode verbunden ist, ist ein nichtleitender Dichtungsring 7 vorgesehen, welcher für einen gas- und flüssigkeitsdichten Abschluß der Zelle sorgt. Als Material für die Dichtung finden Kunststoffe oder andere isolierende Materialien, wie beispielsweise Bitumen, Verwendung. Der Zellnapf 1 und der Deckel 6 solcher Zellen bestehen häufig aus rostsicherem 18/8 Chromnickelstahl. Es findet aber auch entsprechend platiertes unlegiertes Eisenblech Verwendung.

Derartige Knopfzellen sind in zahlreichen Abwandlungen mit unterschiedlichen Elektrodenmaterialien und unterschiedlichen Metallsalzen für den Elektrolyten bekannt.

Bei der Erwärmung derartiger Knopfzellen auf ca. 600°C ntsteht ein starker Überdruck im Inneren der Zellen. Durch die entstehenden Gase werden die Zellen durch den Überdruck geöffnet. Dieser Vorgang wird noch durch den Umstand begünstigt, daß die zwischen Deckel und Gehäuse befindliche Abdichtung aus Kunststoff, Bitumen od.dgl. erweicht und bei Angriff einer oxydierenden Atmosphäre zerstört wird. Zum Zwecke der Zerstörung derartiger Zellen für eine nachgeschaltete Aufbereitung der Metalle wird eine Vorrichtung gemäß Fig. 2 verwendet.

Im Inneren eines doppelwandigen Gehäuses 8 mit feuerfester Verkleidung ist eine Drehretorte 9 angeordnet, welche über Rollböcke 10 und 11 drehbar abgestützt und zur Drehbewegung antreibbar ist. An der einen Seite der Vorrichtung ist eine Aufgabeöffnung 12 vorgesehen, an welche eine Förderschnecke 13 anschließt. Die Wendelgänge der Förderschnecke erstrecken sich bis in das Innere der Drehretorte 9, wobei die Drehretorte in einem ersten Teilbereich nahe dem Aufgabeende 12 auf geringeren Durchmesser abgesetzt ausgebildet ist, als im daran anschließenden zweiten Teilbereich. Die Innenwand der die Drehretorte bildenden Trommel ist mit radial einwärts ragenden Prallblechen 14 versehen. Die Beheizung der Drehretorte kann innerhalb des Raumes 15 über Gasbrenner oder aber auch elektrisch erfolgen, wobei im Falle von Gasbrennern ein Kamin 16 vorgesehen ist. An der dem Aufgabeende gegenüberliegenden Stirnwand 17 der Drehretorte ist ein axiales Rohr 18 angeschlossen, welches die Gasaustrittsöffnung darstellt. Innerhalb dieses axialen Rohres 18 erstreckt sich ein Betätigungsglied 19 für eine Dichtplatte 20. Dieses Betätigungsglied 19 trägt eine Förderschnecke 21 in Abstand von der Dichtplatte 20. Bei einer Verschiebung der Betätigungsstange 19 in Richtung des Pfeiles 22 und gleichzeitiger Rotation der Drehretorte 9 wird an den Wänden des axialen Rohres 18 anhaftendes Material durch die Förderschnecke 21 ausgetragen. An das axiale Rohr 18 ist die in Fig. 3 dargestellte Gaswascheinrichtung 23 angeschlossen. In Fig. 3 ist das Ende des Betätigungsgliedes 19 für die Dichtplatte 20 ersichtlich.

Das über das axiale Rohr 18 austretende Gas gelangt über ein Rohr 24 unterhalb des Flüssigkeitsspiegels 25 des Gaswäschers. Am oberen Deckel dieser Gaswascheinrichtung ist am Stutzen 26 ein nicht dargestelltes Sauggebläse angeschlossen. Der Füllstand der Waschflüssigkeit in der Gaswascheinrichtung 23 kann in einem Schaurohr 27 kontrolliert werden. Am unteren Ende der Gaswascheinrichtung 23 ist ein Absperrhahn 28 vorgesehen, über welchen innerhalb der Waschflüssigkeit kondensierendes Quecksilber abgezogen werden kann.

Für das thermische Aufschließen von gebrauchten galvanischen Elementen werden diese über die Aufgabeöffnung 12 aufgebracht und von der Förderschnecke 13 bei gleichzeitiger Rotation der Drehretorte 9 in die zunächst noch kalte Drehretorte eingebracht. Die Drehretorte dreht sich hiebei im Fördersinn der Schnecke von der Aufgabeöffnung 12 in das Innere der Drehretorte 9. Um die Erfassung der galvanischen Elemente durch die Förderschnecke 13 zu erleichtern, kann das aufgabeseitige Ende der Drehretorte leicht angehoben werden, wobei die Drehachse 29 im Sinne des Pfeiles 30 nach oben angehoben wird. Die Drehretorte wird in der Folge etwa zu einem Drittel gefüllt, wobei durch die Prallbleche 14 die Knopfzellen bzw. galvanischen Elemente angehoben werden und immer wieder auf den Grund derselben zurückfallen. Auf diese Weise wird eine gute Durchmischung bzw. Bewegung des zu erwärmenden Zellmaterials erreicht. Nach Beenden der Füllung wird die Drehretorte verschlossen, wobei über eine Stopfbüchse 31 ein drosselbarer Luftzuführungskanal 32 offen bleibt. Durch den an den Stutzen 26 in Fig. 3 angeschlossenen Saugventilator wird nun ein ständiger Unterdruck in der Drehretorte 9 erreicht, wobei eine dosierte Luftmenge über den Luftzuführungskanal 32 durch die Retorte hindurchgeführt wird. Die Drehretorte wird waagrecht gestellt und es wird somit die Drehachse 29 entgegen der Richtung des Pfeiles 30 wiederum abgesenkt. Hierauf werden die nicht dargestellten Gasbrenner oder eine andere Form der Heizung eingeschaltet und im Inneren der Drehretorte 9 eine Temperatur von ca. 550 bis 600°C eingestellt. Die hiebei entstehenden Quecksilberdämpfe werden in Richtung des Pfeiles 22 gelenkt. Die Förderschnecke 13 lenkt zusätzlich noch durch ihre Drehung gleichzeitig mit der Drehung der Drehretorte den Luftstrom in die gleiche Richtung, so daß die Quecksilberdämpfe durch das über den Luftzuführungskanal 32 angesaugte Trägergas, nämlich Luft, vollständig in das Kondensationsgefäß bzw. die Gaswascheinrichtung 23 übergeführt werden und sich dort vollständig abscheiden. Die Gaswascheinrichtung 23 ist mindestens zur Hälfte mit Wasser gefüllt und es ist ein Doppelmantelgehäuse 33 vorgesehen, über welches eine zusätzliche Kühlung der Wascheinrichtung ermöglicht ist. Der Zufluß zu diesem Doppelmantelgehäuse 33 ist mit 34 in Fig. 3 bezeichnet.

Nach einem Zeitraum von etwa einer Stunde ist erfahrungsgemäß sämtliches Quecksilber aus dem Zellenmaterial entwichen und hat sich in der Gaswascheinrichtung 23 abgeschieden. Hierauf wird die Beheizung der Drehretorte wiederum abgeschaltet und die Drehretorte langsam abgekühlt. Die Rotation wird hiebei fortgesetzt, wobei die Zufuhr von Luft durch den ständigen Unterdruck eine Oxydation der noch vorhandenen organischen Reste von Abdichtungen sicherstellt. Nach dem Auskühlen der Drehretorte wird das Betätigungsglied 19 in Richtung des Pfeiles d2 in Fig. 2 nach links verschoben, wobei die von diesem Betätigungsglied 19 getragene Förderschnecke 21 die Innenwand des sich mit der Drehretorte 9 um die Drehachse 29 drehenden Rohres des axialen Rohres 18 reinigt. Gegebenenfalls innerhalb dieses Rohres kondensierte Quecksilberrückstände werden somit gleichfalls in die Gaswascheinrichtung 23 abgeführt. Das Betätigungsglied 19 wird bis zur Schließstellung der Dichtplatte 20 in Richtung des Pfeiles 22 weiterbewegt und es wird hierauf die Drehbewegung der Drehretorte 9 gestoppt. Hierauf wird die Drehrichtung umgekehrt und die Drehretorte zur Aufgabeöffnung 12, die nun als Austragsöffnung dient, hingeneigt, so daß das Füllgut sich über die Förderschnecke 13 zur Austragsöffnung bewegt. Das auf diese Weise ausgebrachte Füllgut kann unmittelbar einer Aufbereitung durch saure oder alkalische Laugung oder andere metallurgische und elektrochemische Verfahren zugeführt werden.

**Patentansprüche**

1. Einrichtung zum thermischen Aufschließen von gebrauchten galvanischen Elementen, insbesondere quecksilberhaltigen Primärzellen, mit einer drehbar gelagerten, von außen beheizbaren Drehretorte (9), einer Fördereinrichtung (13) zum Einbringen der galvanischen Elemente und einem axialen Rohr (18) als Gasaustragsöffnung, an welche ein Sauggebläse angeschlossen ist, dadurch gekennzeichnet, daß die Drehretorte (9) druckfest ausgebildet ist, wobei die Aufgabeöffnung (12) zumindest teilweise verschließbar ist, daß die Fördereinrichtung von einer Förderschnecke (13) mit reversierbarem Antrieb gebildet ist, daß die Drehretorte (9) nahe der Aufgabeöffnung (12) mit geringerem Durchmesser ausgebildet ist und daß die Förderschnecke (13) starr mit dem Drehretorteninnenmantel verbunden ist und sich bis in den Bereich größeren Innendurchmessers der Drehretorte erstreckt.

2. Einrichtung nach Anspruch 1, dadurch gekennzeichnet, daß an die verschließbare Aufgabeöffnung (12) eine Drosseleinrichtung für die Steuerung der Luftzufuhr angeschlossen ist.

3. Einrichtung nach Anspruch 1 oder 2, dadurch gekennzeichnet, daß die Drehretorte (9) um ihre Längsachse kippbar gelagert ist.

4. Einrichtung nach Anspruch 1, 2 oder 3, dadurch gekennzeichnet, daß die Drehretorte (9) an ihrem Innenmantel sich in Achsrichtung erstreckende, insbesondere achsparallele, sich radial einwärts erstreckende Prallbleche (14) aufweist.

5. Einrichtung nach einem der Ansprüche 1 bis 4, dadurch gekennzeichnet, daß die Gasaustrittsöffnung als an der der Förderschnecke gegenüberliegenden Stirnwand der Drehretorte (9) in der Drehachse derselben angeordnetes axiales Rohr (18) ausgebildet ist.

6. Einrichtung nach einem der Ansprüche 1 bis 5, dadurch gekennzeichnet, daß die Gasaustrittsöffnung durch eine Dichtplatte (20) verschließbar ist, deren Betätigungsglied (19) sich durch die Gasaustrittsöffnung erstreckt und in einem Abstand von der Dichtplatte Abstreifelemente trägt, welche beim Schließen der Gasaustrittsöffnung die Innenwand des Rohres räumen.

7. Einrichtung nach Anspruch 6, dadurch gekennzeichnet, daß die Abstreifelemente des Betätigungsgliedes (19) für den Verschluß als Förderschnecke (21) ausgebildet sind.

8. Einrichtung nach einem der Ansprüche 1 bis 7, dadurch gekennzeichnet, daß an die Gasaustrittsöffnung eine Gaswascheinrichtung (23) angeschlossen ist, an deren tiefster Stelle ein Absperrhahn (28) für das Ablassen von gegenüber der Waschflüssigkeit spezifisch schwererem Kondensat angeordnet ist, und daß das Sauggebläse an die Gaswascheinrichtung (23) angeschlossen ist.

**Revendications**

1. Dispositif pour la décomposition thermique d'éléments galvaniques usés, notamment des cellules primaires contenant du mercure, comportant une cornue (9) montée de façon tournante et pouvant être chauffée de l'extérieur, un dispositif transporteur (13) pour l'introduction des éléments galvaniques et un tube axial (18) servant d'ouverture de décharge de gaz et auquel est relié un ventilateur d'aspiration, caractérisé en ce que la cornue tournante (9) est agencée de manière à résister à la pression, l'ouverture d'introduction (12) pouvant être au moins partiellement obturée, en ce que le dispositif transporteur est constitué par une vis sans fin (13) avec entraînement réversible, en ce que la cornue tournante (9) est réduite en diamètre à proximité de l'ouverture d'entrée (12) et en ce que la vis sans fin de transport (13) est reliée rigidement à la périphérie intérieure de la cornue tournante et s'étend jusque dans la zone de grand diamètre intérieur de la cornue tournante.

2. Dispositif selon la revendication 1, caractérisé en ce que l'ouverture d'entrée obturable (12) est reliée à un dispositif d'étranglement pour la commande de l'alimentation en air.

3. Dispositif selon une des revendications 1 ou 2, caractérisé en ce que la cornue tournante (9) est montée de façon à pouvoir basculer autour de son axe longitudinal.

4. Dispositif selon la revendication 1, 2 ou 3, caractérisé en ce que la cornue tournante (9) comporte sur sa périphérie intérieure des tôles déflectrices (14) s'étendant dans une direction axiale, en particulier parallèlement à l'axe. et radialement vers l'intérieur.

5. Dispositif selon une des revendications 1 à 4, caractérisé en ce que l'ouverture de sortie de gaz est agencée sous la forme d'un tube axial (18) disposé sur la paroi frontale, opposée à la vis sans fin, de la cornue tournante (9) sur l'axe de rotation de cette dernière.

6. Dispositif selon une des revendications 1 à 5, caractérisé en ce que l'ouverture de sortie de gaz peut être obturée par une plaque d'étanchéité (20) dont un organe d'actionnement (19) s'étend au travers de l'ouverture de sortie de gaz et porte, à distance de la plaque d'étanchéité, des éléments de raclage qui, lors de l'obturation de l'ouverture de sortie de gaz, nettoient la paroi intérieure du tube.

7. Dispositif selon la revendication 6, caractérisé en ce que les éléments de raclage de l'organe d'actionnement (19) de l'obturateur sont agencés sous forme d'une vis sans fin de transport (21).

8. Dispositif selon une des revendications 1 à 7, caractérisé en ce que l'ouverture de sortie de gaz est reliée à un dispositif de lavage de gaz (23) au point le plus bas duquel est disposée une vanne d'arrêt (28) pour la décharge d'un condensat de masse spécifique plus grande que le liquide de lavage et en ce que le ventilateur d'aspiration est relié au dispositif de lavage de gaz (23).

**Claims**

1. Device for the thermal decomposition of used galvanic cells, particularly mercury-containing primary cells, comprising a rotary retort (9) rotatably mounted and heatable from the outside, a conveyor (13) for feeding the galvanic cells, and an axial tube (18) as gas exit opening to which a suction blower is connected, characterised in that the rotary retort (9) is designed pressure resistant, the feeding port (12) being at least partially closable, that the conveyor is designed as screw conveyor (13) having a reversible drive means, that the rotary retort (9) has a smaller diameter in the vicinity of the feeding port (12), and that the screw conveyor (13) is rigidly connected with the inner shell of the rotary retort and extends into the zone of greater inner diameter of the rotary retort.

2. Device as claimed in claim 1, characterised in that a throttle means for controlling air intake is connected to the closable feeding port (12).

3. Device as claimed in claim 1 or 2, characterised in that the rotary retort (9) is mounted tiltably about its longitudinal axis.

4. Device as claimed in claim 1, 2 or 3, characterised in that the rotary retort (9) on its inner shell has baffle plates (14) extending radially inwardly and in an axial direction, particularly in parallel with the axis.

5. Device as claimed in any one of claims 1 to 4, characterised in that the gas exit opening is designed as an axial tube (18) in the axis of rotation of the rotary retort (9) at the face plate opposite of the screw conveyor.

6. Device as claimed in any one of claims 1 to 5, characterised in that the gas exit opening is closable by a sealing plate (20) which has an actuating member (19) extending through the gas exit opening and bearing wiper elements in a distance from the sealing plate, said wiper elements clearing the inner wall of the tube when the gas exit opening is being closed.

7. Device as claimed in claim 6, characterised in that the wiper elements of the actuating member (19) for the closure are designed as a conveyor screw (21).

8. Device as claimed in any one of claims 1 to 7, characterised in that a gas scrubber (23) is connected to the gas exit opening, a stop valve (28) for tapping condensate of higher specific gravity than the washing liquid being arranged at the lowermost point of the gas scrubber, and that the suction blower is connected to the gas scrubber (23).

## FIG.1

## FIG.3

FIG. 2